(19) **Europäisches Patentamt**
**European Patent Office**
**Office européen des brevets**

(11) **EP 4 576 374 A1**

(12) **EUROPEAN PATENT APPLICATION**
published in accordance with Art. 153(4) EPC

(43) Date of publication:
**25.06.2025 Bulletin 2025/26**

(51) International Patent Classification (IPC):
***H01M 50/342*** (2021.01)

(21) Application number: **22958977.5**

(22) Date of filing: **19.09.2022**

(52) Cooperative Patent Classification (CPC):
**H01M 50/291; H01M 50/103; H01M 50/209;**
**H01M 50/30; H01M 50/342; H01M 50/3425;**
H01M 2200/20; Y02E 60/10

(86) International application number:
**PCT/CN2022/119572**

(87) International publication number:
**WO 2024/059963 (28.03.2024 Gazette 2024/13)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **CONTEMPORARY AMPEREX**
**TECHNOLOGY**
**(HONG KONG) LIMITED**
**Central (HK)**

(72) Inventors:
• **KE, Jianhuang**
  **Ningde, Fujian 352100 (CN)**
• **CHEN, Xiaobo**
  **Ningde, Fujian 352100 (CN)**
• **LI, Yao**
  **Ningde, Fujian 352100 (CN)**

(74) Representative: **Ran, Handong**
**Maucher Jenkins**
**Seventh Floor Offices**
**Artillery House**
**11-19 Artillery Row**
**London SW1P 1RT (GB)**

(54) **BATTERY CELL, BATTERY, AND ELECTRIC APPARATUS**

(57)     Provided in the embodiments of the present application are a battery cell, a battery, and an electric apparatus. The battery cell (100) comprises: a casing (10), provided with a closed inner chamber (101); an electrode assembly (102), arranged in the inner chamber (101); and a first pressure relief component (1), arranged on the casing (10). The first pressure relief component (1) is provided with a first weak part (13). The first weak part (13) is a thinned part and is configured to be opened when a first preset condition is met in the casing (10).

FIG. 3

**Description**

Technical Field

The present application relates to the technical field of batteries, and more particularly to a battery cell, a battery, and a power consuming device.

Background Art

Thanks to the advantages such as high energy density, high power density, numerous cycle uses, and long storage time, batteries such as lithium-ion batteries have been widely applied in electric vehicles.

However, how to enhance the safety of batteries of the electric vehicles in use has been always a problem in the industry.

Summary of the Invention

An objective of the present application is to improve the safety of a battery in use.

According to a first aspect of the present application, a battery cell is provided, comprising: a housing having a closed inner cavity; an electrode assembly arranged in the inner cavity; an electrode assembly arranged in the inner cavity; and a first pressure relief component arranged on the housing, wherein the first pressure relief component has a first weakened portion, and the first weakened portion is a thickness-reduced portion and is configured to be opened when a first preset condition is met within the housing.

When the battery cell of this embodiment is subjected to thermal runaway, due to the reduced thickness at the first weakened portion, which results in the reduced strength, the first weakened portion can be reliably opened to smoothly discharge the emissions inside the housing, so as to prevent the housing of the battery cell from bulging or even exploding due to untimely pressure relief, so that the operation safety of the battery cell can be improved.

In some embodiments, a ratio of the thickness $\delta$ of the first weakened portion to the area $S$ enclosed by the first weakened portion satisfies the following relationship:

$$1.5 \times 10^{-5} \leq \frac{\delta}{S} \leq 7.5 \times 10^{-3}.$$

Since the thickness $\delta$ of the first weakened portion and the area $S$ enclosed by the first weakened portion have a significant impact on the safety performance of the battery, in this embodiment, the ratio of the thickness $\delta$ of the first weakened portion to the area $S$ enclosed by the first weakened portion is designed to be within an appropriate range, so that when the battery cell is subjected to thermal runaway, the first weakened portion can be reliably opened to allow the internal emissions to be discharged smoothly, so as to prevent the battery cell from exploding due to untimely pressure relief. Moreover, it is also possible to ensure that the discharge speed of the emissions is appropriate, which can not only allow the emissions to be discharged from the housing in a short time, improving the safety of the battery cell, but can also reduce the difficulty of protecting the battery. In addition, the first weakened portion may also provide a certain opening condition for the first pressure relief component to avoid damage under normal use and vibration and impact conditions.

In some embodiments, $$3 \times 10^{-5} \leq \frac{\delta}{S} \leq 3 \times 10^{-3}.$$

In this embodiment, the value range of $\delta/S$ can allow the first weakened portion to be reliably opened when the battery cell is subjected to thermal runaway, so that the internal emissions are discharged smoothly, so as to prevent the battery cell from exploding due to untimely pressure relief. Moreover, the pressure relief speed is appropriate, which can not only allow the emissions to be uniformly discharged from the housing in a short time, improving the safety of the battery cell, but can also reduce the difficulty of protecting the battery.

In some embodiments, a ratio of the capacity iC of the battery cell to the area S enclosed by the first weakened portion satisfies the following relationship: $$0.0125 \leq \frac{C}{S} \leq 1.25.$$

Since the capacity $C$ of the battery cell and the area enclosed by the first weakened portion have a significant impact on the safety performance of the battery, in this embodiment, the ratio of capacity $C$ of the battery cell to the area S enclosed by the first weakened portion is designed to be within an appropriate range, so that when the battery cell is subjected to thermal runaway, the first weakened portion can be reliably opened to allow the internal emissions to be discharged smoothly, so as to prevent the battery cell from exploding due to untimely pressure relief. Moreover, on the basis of ensuring smooth pressure relief, it is possible to prevent the redundant design of the first pressure relief component, improve economy, make the pressure relief speed appropriate, prevent a large amount of particulate matter from being ejected during the pressure relief to cause heavy weight loss, and minimize the difficulty of protecting the battery.

In some embodiments, $0.0125 \leq \frac{C}{S} \leq 0.5$.

In this embodiment, the value range of $C/S$ can allow the first weakened portion to be reliably opened when the battery cell is subjected to thermal runaway, so that the internal emissions are discharged smoothly, so as to prevent the battery cell from exploding due to untimely pressure relief. Moreover, the pressure relief speed is appropriate, which can reduce the weight loss of the battery cell during the pressure relief, thereby reducing the difficulty of protecting the battery.

In some embodiments, the first pressure relief component is a separate component and is connected to the housing.

The first pressure relief component of this embodiment can be machined as a separate part. The process difficulty is low during machining, and can be machined into a structure with a relatively complex shape, and it is easy to ensure the machining accuracy of the first weakened portion, such as the thickness $\delta$ of the first weakened portion, so as to control the opening condition of the first pressure relief component more accurately. When the battery cell is subjected to thermal runaway, the first pressure relief component is opened smoothly and will not be opened under normal operating conditions.

In some embodiments, the first pressure relief component is integrally formed with the housing.

In this embodiment, the first pressure relief component is integrated with the housing, so that the process of fixing the first pressure relief component to the housing by welding, etc., can be eliminated, thereby improving the production efficiency of the battery cell. Moreover, it is also possible to improve the connection strength of the first pressure relief component, prevent a weld seam from being partially exfoliated after long-term use of the battery cell, which causes the first pressure relief component to be unreliably connected to the housing, and improve the operating reliability and service life of the battery cell.

In some embodiments, the first pressure relief component comprises a base, the base is provided with a first recess to form a thickness-reduced portion, and the first weakened portion is provided on the thickness-reduced portion.

In this embodiment, the first recess is machined in advance, and the first weakened portion is formed based on the thickness-reduced portion, so that the amount of material removal required to form the first weakened portion can be reduced. For example, the depth of a second recess or an indentation is reduced, so that it is possible to reduce the machining difficulty, reduce the amount of deformation during machining, and easily ensure the machining accuracy of the thickness $\delta$ of the first weakened portion.

In some embodiments, the first weakened portion is formed by an indentation, and the indentation forms a closed extension path.

In this embodiment, the indentation forms a closed extension path, so that when the battery cell is subjected to thermal runaway, the indentation can be torn all around, a first discharge port can be quickly opened to prevent the first discharge port from being blocked, and the internal emissions are quickly discharged, thereby reducing the pressure within the battery cell and preventing the housing from bulging.

In some embodiments, the first weakened portion is formed by an indentation, and two ends of the indentation do not coincide with each other.

In this embodiment, when the battery cell is subjected to thermal runaway, the first weakened portion is still connected to the housing and will not be ejected with the emissions after the indentation is torn, so that the risk of high-pressure ignition caused by the uncontrollable flying out of a metal sheet, and the risk of clogging of a second pressure relief component on the case assembly can be reduced, improving the operating safety of the battery.

In some embodiments, the indentation 13B forms a U-shape, a V-shape or a W-shape.

In this embodiment, the first weakened portion can be configured into a special shape according to the pressure relief requirements. During the pressure relief, the first weakened portion is still connected to the housing and will not be ejected with the emissions, and when the thermal runaway occurs, these shapes facilitates the destroying in corner regions, enabling reliable opening for pressure relief.

In some embodiments, the housing is provided with at least two first pressure relief components.

In this embodiment, by providing at least two first pressure relief components, in practice, the number and shape of the first pressure relief components can be designed according to the type of the battery cell, the size of a wall surface of the housing that is provided with the first pressure relief components, and pressure relief performance and reliability requirements, so that the configuration of the first pressure relief components is more flexible and can flexibly meet the requirements of different battery cells.

In some embodiments, the battery cell further comprises electrode terminals, wherein the electrode terminals and the first pressure relief component are arranged on different walls of the housing.

In this embodiment, the electrode terminals and the first pressure relief component are arranged on different walls of the housing, so that the difficulty of layout is reduced, and it is also conducive to providing the electrode terminals and the first pressure relief component that have larger areas according to requirements, thereby making it easier to well meet the requirements of electrical performance and pressure relief.

According to a second aspect of the present application, a battery is provided, comprising a battery cell of the above embodiment.

In some embodiments, the first pressure relief component is arranged on a first wall of the housing; and the battery further comprises a case assembly for receiving the battery cell, a second wall of the case assembly opposite to the first wall is provided with a second weakened portion, the second weakened portion is configured to be opened when emissions from the battery cell meet a second preset condition, such that the emissions from the battery cell enter an exhaust passage of the case assembly.

In this embodiment, the second wall of the case assembly opposite to the first wall is provided with the second weakened portion, so that it is possible that when the battery cell is subjected to thermal runaway, the emissions can smoothly enter the exhaust passage, and when the battery operates normally, the second weakened portion can function to increase the strength of the second wall to improve the overall rigidity of the case assembly. For example, when the battery is mounted to a power consuming device such as a vehicle and receives vibration and impact, the amount of deformation of the second wall can be reduced.

In some embodiments, the minimum thickness H of the second weakened portion, the area S enclosed by the first weakened portion and the energy density $E$ of the battery cell satisfy the following relationship: $0.08 \leq \dfrac{H}{E/S} \leq 20$ .

In this embodiment, $H/(E/S)$ is designed within a suitable range, so that when the battery cell is subjected to thermal runaway, the second weakened portion can be reliably opened such that the emissions from the battery cell can smoothly enter the exhaust passage to achieve normal pressure relief, thereby preventing the battery cell from exploding due to untimely pressure relief. Moreover, it is also possible to ensure that the second weakened portion will not be damaged during normal operation or under vibration and impact, and has a certain opening condition, so that the structural strength of the second wall is increased.

In some embodiments, $0.2 \leq \dfrac{H}{E/S} \leq 10$ .

In this embodiment, the value range of $C/S$ can allow for normal pressure relief when the battery cell is subjected to thermal runaway, and can allow the emissions from the battery cell to smoothly enter the exhaust passage while ensuring that the battery is not damaged during normal operation and under vibration and impact, so that the emissions smoothly flows to the second pressure relief component to achieve the pressure relief function. Moreover, the emissions can also enter the exhaust passage at a uniform speed, preventing the instantaneous increase in pressure due to gas accumulation in the exhaust passage, which results in the bulging of the case assembly, and reducing the difficulty of protecting the battery.

In some embodiments, the case assembly comprises a bottom wall and a support plate, the exhaust passage is formed between the support plate and the bottom wall, and the support plate serves as the second wall and is configured to support the battery cell.

In this embodiment, the space between the support plate and the bottom wall of the case assembly is fully utilized to form the exhaust passage, so that it is possible to realize an exhaust passage having a larger space and allow the pressure and temperature of the emissions from the battery cell that is subjected to thermal runaway to be instantly reduced after entering the exhaust passage, facilitating the smooth flow of the emissions to the second pressure relief component. Moreover, the support plate can also form a second discharge port for allowing the emissions to enter the exhaust passage during thermal runaway while functioning to support the battery cell.

In some embodiments, the case assembly comprises a partition plate, the partition plate is configured to divide an internal space of the case assembly into at least two receiving cavities, and the battery cell is arranged in the receiving cavity; and the partition plate comprises two side plates arranged spaced apart from each other and facing the battery cell, the side plates serve as the second wall, and the exhaust passage is formed between the two side plates.

In this embodiment, by providing a cavity in the partition plate to form the exhaust passage, the internal space of the structural member can be fully utilized while achieving weight reduction.

According to a third aspect of the present application, a power consuming device is provided, comprising a battery cell and/or a battery of the above embodiments, which is configured to supply electric energy to the power consuming device.

Brief Description of the Drawings

In order to more clearly illustrate the technical solutions of the embodiments of the present application, the accompanying drawings required in the embodiments of the present application will be briefly described below. Obviously, the accompanying drawings described below are merely some embodiments of the present application, and for those of ordinary skill in the art, other accompanying drawings can be obtained from these accompanying drawings without making creative efforts.

FIG. 1 is a schematic structural diagram of a battery mounted to a vehicle according to some embodiments of the present application.

FIG. 2 is an exploded view of a battery according to a first embodiment of the present application.

FIG. 3 is a cross-sectional view of the battery shown in FIG. 2, where the cross-sectional plane is perpendicular to an extension direction of a partition plate.

FIG. 4 is an enlarged view of part A in FIG. 3.

FIG. 5 is an exploded view of a battery cell according to some embodiments.

FIG. 6 is a cross-sectional view of a battery according to a second embodiment of the present application.

FIG. 7 is a cross-sectional view of a battery according to a third embodiment of the present application.

FIG. 8 is a cross-sectional view of a battery according to a fourth embodiment of the present application.

FIG. 9 is an enlarged view of part B of FIG. 8.

FIG. 10 is a cross-sectional view of a battery according to a fifth embodiment of the present application.

FIG. 11 is a front view of a first embodiment of a first pressure relief component in a battery cell of the present application.

FIG. 12 is a cross-sectional view, taken through C-C, of the first pressure relief component shown in FIG. 11.

FIG. 13 is an enlarged view of part D of FIG. 12.

FIG. 14 is a front view of a second embodiment of a first pressure relief component in a battery cell of the present application.

FIG. 15 is a front view of a third embodiment of a first pressure relief component in a battery cell of the present application.

FIG. 16 is a front view of a fourth embodiment of a first pressure relief component in a battery cell of the present application.

FIG. 17 is a front view of a fifth embodiment of a first pressure relief component in a battery cell of the present application.

FIGS. 18A, 18B and 18C are front views of a sixth embodiment of a first pressure relief component respectively with U-shaped, V-shaped and W-shaped indentations.

FIGS. 19A, 19B and 19C are respectively a front view, a cross-sectional view taken through E-E, and an enlarged view of part F, of a seventh embodiment of a first pressure relief component in a battery cell of the present application.

FIGS. 20A, 20B and 20C are respectively a front view, a cross-sectional view taken through G-G, and a cross-sectional view taken through H-H, of an eighth embodiment of a first pressure relief component in a battery cell of the present application.

FIG. 21 is a front view of a ninth embodiment of a first pressure relief component in a battery cell of the present application.

FIG. 22 is an exploded view of a battery cell according to some other embodiments.

In the accompanying drawings, the figures are not drawn to scale.

List of reference signs:

100. battery cell; 10. housing; 10A. inner cavity; 101. main body portion; 102. electrode assembly; 103. end cap assembly; 103A. end cap body; 10'. first wall; 1. first pressure relief component; 11. base; 12. first recess; 12'. thickness-reduced portion; 13. first weakened portion; 13A. second recess; 13B. indentation; 2. electrode terminal; 200. battery; 20. case assembly; 21. receiving portion; 211. side wall; 22. first cover body; 221. bottom wall; 23. second cover body; 231. top wall; 24. support plate; 241. second weakened portion; 242. third recess; 25. partition plate; 251. side plate; 252. connection plate; 26. fastener; 27. bus member; P. receiving cavity; Q. exhaust passage; 300. vehicle; 301. axle; 302. wheel; 303. motor; 304. controller.

Detailed Description of Embodiments

The implementations of the present application will be further described in detail below in conjunction with the accompanying drawings and embodiments. The following detailed description of the embodiments and the accompanying drawings are used to illustrate the principle of the present application by way of example and are not intended to limit the scope of the present application. That is, the present application is not limited to the described embodiments.

In the description of the embodiments of the present application, the term "a plurality of" means two or more (including two), similarly the term "a plurality of groups" means two or more groups (including two groups), and the term "a plurality of pieces" means two or more pieces (including two pieces).

The present application uses the description of the orientations or positional relationships indicated by the terms "upper", "lower", "top", "bottom", "front", "rear", "inner", "outer", etc., which are merely for convenient description of the present application, rather than indicating or implying that a device referred to needs to have a particular orientation or be constructed and operated in a particular orientation, and therefore cannot be construed as limiting the scope of protection of the present application.

In addition, the terms "first", "second", "third", etc. are merely for descriptive purposes, and should not be construed as indicating or implying the relative importance. The term "perpendicular" does not mean being perpendicular in the strict sense, but within an allowable range of tolerance. The term "parallel" does not mean being parallel in the strict sense, but within an allowable range of tolerance. The orientation terms in the following description all indicate directions shown in the accompanying drawings, and do not limit the specific structure in the present application.

In the description of the present application, it should also be noted that the terms "mounting", "connecting", and "connection" should be interpreted in the broad sense unless explicitly defined and limited otherwise. For example, the connection may be a fixed connection, a detachable connection, or an integral connection, or may be a direct connection, or an indirect connection by means of an intermediate medium. For those of ordinary skill in the art, the specific meanings of the terms mentioned above in the present application can be construed according to specific circumstances.

The phrase "an embodiment" mentioned herein means that the specific features, structures and characteristics described in conjunction with the embodiment may be included in at least some embodiments of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

A battery cell may include a lithium-ion secondary battery, a lithium-ion primary battery, a lithium-sulfur battery, a sodium/lithium ion battery, a sodium-ion battery or a magnesium-ion battery, etc., which is not limited by the embodiments of the present application. The battery cell may be cylindrical, flat, cuboid or in another shape, which will also not be limited in the embodiments of the present application. The battery cells are generally classified into three types depending on the way of package: cylindrical battery cells, prismatic battery cells and pouch battery cells, which will also not be limited in the embodiments of the present application.

An existing battery cell generally comprises a housing and an electrode assembly received in the housing, and the interior of the housing is filled with an electrolyte. The electrode assembly is mainly formed by stacking or winding a first electrode plate and a second electrode plate that have opposite polarities, and a separator is generally provided between the first electrode plate and the second electrode plate. In some embodiments, the parts of the first electrode plate and the second electrode plate that are coated with a coating layer form a main body portion of the electrode assembly, and the parts of the first electrode plate and the second electrode plate that coated with no coating layer respectively form a first tab and a second tab. In a lithium-ion battery, the first electrode plate may be a positive electrode plate, which comprises a positive current collector and positive coating layers arranged on two sides of the positive current collector, wherein the material of the positive current collector may be, for example, aluminum, and the positive coating layers may be of, for example, lithium cobalt oxide, lithium iron phosphate, ternary lithium or lithium manganate, etc.; and the second electrode plate may be a negative electrode plate, which comprises a negative current collector and negative coating layers arranged on two sides of the negative current collector, wherein the material of the negative current collector may be, for example, copper, and the negative coating layers may be of, for example, graphite or silicon, etc. The first tab and the second tab may jointly be located at one end of the main body portion or respectively at two ends of the main body portion. During the charging and discharging of the battery cell, the positive coating layer and the negative coating layer react with an electrolytic solution, and the tabs are connected to the electrode terminals to form a current loop.

The pressure relief component refers to an element or component that is actuated, when an internal pressure or temperature of the battery cell reaches a predetermined threshold, to relieve the internal pressure or heat. The threshold design varies according to different design requirements. The threshold may depend on the material of one or more of the positive electrode plate, the negative electrode plate, the electrolytic solution and the separator in the battery cell. The pressure relief component may be in the form of, for example, an explosion-proof valve, an air valve, a pressure relief valve, or a safety valve, etc., and may specifically use a pressure- or temperature-sensitive element or structure, namely, when the internal pressure or temperature of the battery cell reaches the predetermined threshold, the pressure relief component performs an action or a weak structure provided in the pressure relief component is destroyed, thereby forming an opening or passage through which the internal pressure or temperature can be released.

The "actuation" mentioned in the present application means that the pressure relief component acts or is activated to a certain state, such that the internal pressure and heat of the battery cell can be relieved. The action performed by the pressure relief component may include, but is not limited to: at least part of the pressure relief component being broken, cracked, torn or opened, etc. When the pressure relief component is actuated, emissions inside the battery cell are discharged outwardly from the actuated position. In this way, the pressure and temperature of the battery cell can be relieved at a controllable pressure or temperature, thereby avoiding potential, more serious accidents.

The emissions from the battery cell mentioned herein include, but are not limited to, the electrolytic solution, dissolved or split positive and negative electrode plates, fragments of the separator, high-temperature and high-pressure gases (such as CH4, CO and other combustible gases) generated by a reaction, flames, etc.

Current batteries may have poor safety issues during use. The inventors have found through research that the main reason for poor safety of the batteries is that the battery cell is provided with a pressure relief component. When the battery is subjected to thermal runaway, the internal pressure of the battery cell rises sharply. However, a weakened part of the pressure relief component cannot be opened in a timely manner due to its high strength. When the pressure is too high, an explosion may occur, and other parts of the battery cell may be damaged. Otherwise, even if the pressure relief component can be opened, but the area of the formed discharge port is small, resulting in that the internal gas, flame, etc. cannot be discharged quickly. Alternatively, where the weakened portion of the pressure relief component has a low strength, the pressure relief component would be opened when the internal pressure of the battery cell does not reach a predetermined opening pressure of the pressure relief component, thereby affecting the operation of the battery cell under normal operating conditions.

After finding the above problems, the inventors wanted to design a suitable parameter range for a pressure relief component based on the operating mechanism of the pressure relief component through a large number of experiments, such that when the battery cell is subjected to thermal runaway, the pressure relief component can be opened smoothly at a predetermined opening pressure and also ensure the normal operation.

Based on this improvement idea, an embodiment of the present application proposes an improved battery cell, comprising: a housing having a closed inner cavity; an electrode assembly arranged in the inner cavity; and a first pressure relief component arranged on the housing, wherein the first pressure relief component has a first weakened portion, and the first weakened portion is a thickness-reduced portion and is configured to be opened when an environment within the housing meets a first preset condition.

When such a battery cell is subjected to thermal runaway, due to the reduced thickness at the first weakened portion, which results in the reduced strength, the first weakened portion can be reliably opened to smoothly discharge the emissions inside the housing, so as to prevent the housing of the battery cell from bulging or even exploding due to untimely pressure relief, so that the operation safety of the battery cell can be improved.

The battery cell or the battery according to the embodiments of the present application may be used in a power consuming device.

The power consuming device may be, for example, a mobile phone, a portable apparatus, a laptop, an electric motorcycle, an electric vehicle, a ship, a spacecraft, an electric toy, or an electric tool. For example, the spacecraft includes an airplane, a rocket, a space shuttle, or a spaceship. The electric toy includes a fixed or mobile electric toy, such as a game console, an electric vehicle toy, an electric ship toy, and an electric airplane toy. The electric tool includes an electric tool for metal cutting, an electric tool for grinding, an electric tool for assembling and an electric tool for railways, such as an electric drill, an electric grinder, an electric wrench, an electric screwdriver, an electric hammer, an electric impact drill, a concrete vibrator, and an electric planer.

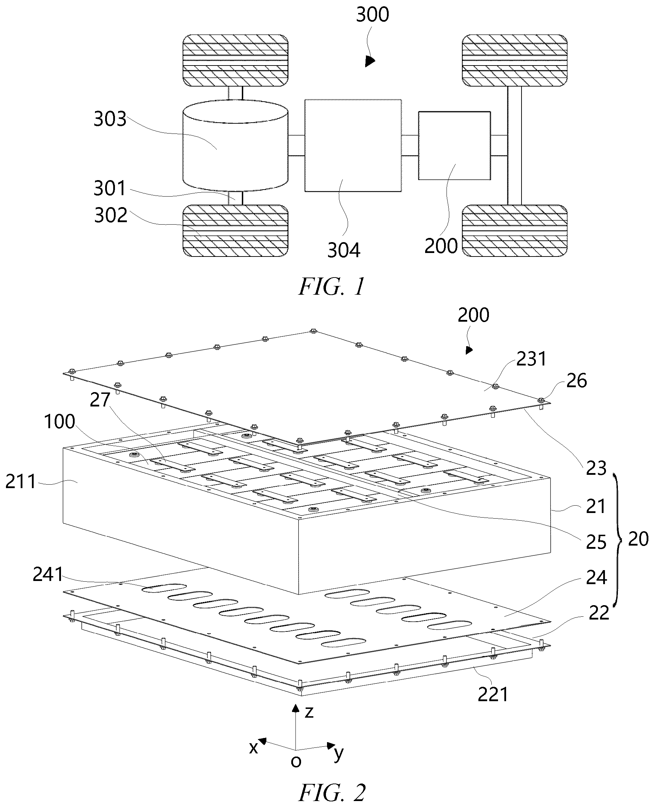

As shown in FIG. 1, the power consuming device may be a vehicle 300, for example, a new energy vehicle. The new energy vehicle may be a battery electric vehicle, a hybrid electric vehicle, an extended-range electric vehicle, or the like. Alternatively, the power consuming device may also be an unmanned aerial vehicle, a ship, or the like. Specifically, the vehicle 300 may comprise an axle 301, wheels 302 connected to the axle 301, a motor 303, a controller 304 and a battery 200, wherein the motor 303 is configured for driving the axle 301 to rotate, the controller 304 is configured for controlling operation of the motor 303, and the battery 200 may be arranged at the bottom, head, or tail of the vehicle 300, and configured for providing electric energy for operations of the motor 303 and other components in the vehicle.

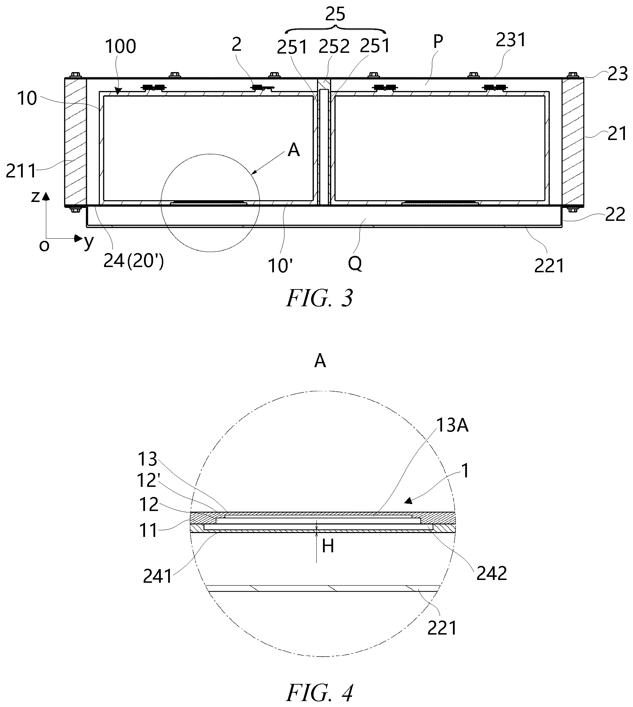

In some embodiments, as shown in FIGS. 2 and 3, the battery 200 comprises a case assembly 20 and a battery cell 100. In the battery 200, one or more battery cells 100 may be provided. If a plurality of battery cells 100 are provided, the plurality of battery cells 100 may be in series connection, in parallel connection or in series-parallel connection. The series-parallel connection refers to that the plurality of battery cells 100 are in series and parallel connection. It is possible that the plurality of battery cells 100 to be firstly connected in series or in parallel or in series-parallel via a bus member 27 to form a battery module, and then a plurality of battery modules are connected in series or in parallel or in series-parallel to form a unit and are received inside the case assembly 20. It is also possible that all the battery cells 100 are directly connected in series, or in parallel, or in series-parallel via a bus member 27, and a unit composed of all the battery cells 100 is then received inside the case assembly 20.

The case assembly 20 may be a part of a battery 200, and the case assembly 20 is detachably mounted to the power consuming device. Alternatively, the case assembly 20 may also be a space formed by a structural member in the power consuming device, for receiving the battery cell 100. For example, when the battery cell 100 is used in the vehicle 300, the case assembly 20 is a space formed by a vehicle frame for receiving the battery cell 100.

The case assembly 20 is hollow inside and used for receiving one or more battery cells 100, and the case assembly 20 may also be sized in different shapes according to the shape, number, combination manner and other requirements of the received battery cells 100. For example, the case assembly 20 may comprise: a receiving portion 21, a first cover body 22 and a second cover body 23. The receiving portion 21 has openings at two opposite ends. The first cover body 22 and the second cover body 23 are respectively configured to close the openings at the two ends of the receiving portion 21. For example, the first cover body 22 and the second cover body 23 may be both detachably mounted to the receiving portion 21 via fasteners 26. In FIG. 2, the receiving portion 21 has a rectangular tubular structure according to the arrangement of the plurality of battery cells 100.

Optionally, the receiving portion 21 and the first cover body 22 form an integral structure as a case. The first cover body 22 may be a bottom cover and have a bottom wall 221, and the second cover body 23 may be a top cover and have a top wall 231.

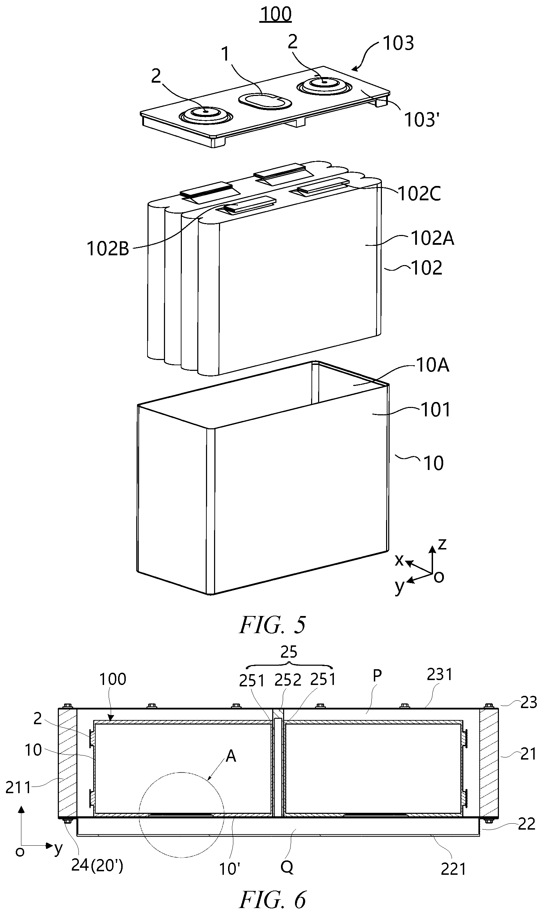

In some embodiments, as shown in FIG. 5, the battery cell 100 of the present application comprises a housing 10, an electrode assembly 102 and a first pressure relief component 1. The housing 10 has a closed inner cavity 10A. The electrode assembly 102 is arranged in the inner cavity 10A. The first pressure relief component 1 is arranged on the housing 10. The first pressure relief component 1 has a first weakened portion 13, and the first weakened portion 13 is a thickness-reduced portion and is configured to be opened when a first preset condition is met within the housing 10.

The housing 10 is of a thin-walled hollow structure, and the interior is configured to receive the electrode assembly. The housing 10 may be in a rectangular, cylindrical or prism shape. The electrode assembly 102 comprises an electrode main body 102A, and a first tab 102B and a second tab 102C with opposite polarities. The housing 10 is provided with two electrode terminals 2 with opposite polarities. The first tab 102B and the second tab 102C are each electrically connected to the electrode terminal 2 with the same polarity.

The electrode terminals 2 and the first pressure relief component 1 may be arranged on the same wall of the housing 10, for example, both are arranged on an end cap to facilitate machining; or they may be arranged on different walls, for example, on adjacent walls or opposite walls.

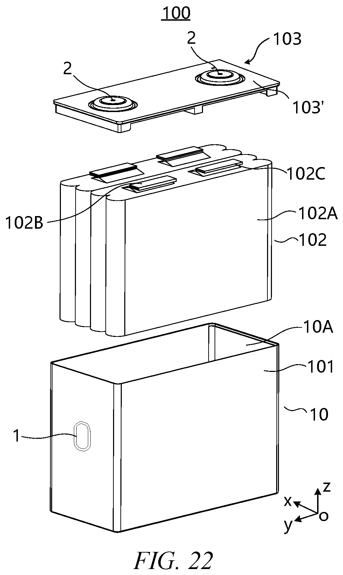

As shown in FIG. 5, the housing 10 comprises a main body portion 101 and an end cap assembly 103. The main body portion 101 has an opening, and the end cap assembly 103 is configured to seal the opening. The end cap assembly 103 comprises an end cap body 103', and the two electrode terminals 2 and the first pressure relief component 1 are both arranged on the end cap body 103'. Optionally, as shown in FIG. 22, the first pressure relief component 1 is arranged on a side wall of the main body portion 101 that is adjacent to the opening and/or a side wall that is opposite to the opening. In FIGS. 6 to 8 and 10, the housing 10 is simplified and shown as an integral form, but in fact, the side walls of the housing 10 that are provided with the electrode terminals 2 are both end cap bodies 103'.

The first pressure relief component 1 has a first weakened portion 13. The first weakened portion 13 is configured such that when the first preset condition is met within the housing 10, the first pressure relief component 1 is destroyed and opened preferentially from the first weakened portion 13, so as to form a first vent port for communicating the interior of the housing 10 with the outside world, allowing the emissions in the battery cell 100 to be discharged. The first preset condition includes at least one of the following: the temperature inside the housing 10 exceeding a first preset temperature, and the pressure inside the housing 10 exceeding a first preset pressure. For example, for a battery with a square housing, the first preset pressure may be 0.9 MPa. The actual value may fluctuate, and the design value of the first preset pressure may also vary for different battery cells 100.

The first weakened portion 13 may be a thickness-reduced portion, that is, the thickness of the first weakened portion 13 is less than the thickness of the side wall of the housing 10 that is provided with the first weakened portion 13, so as to reduce the structural strength by reducing the thickness.

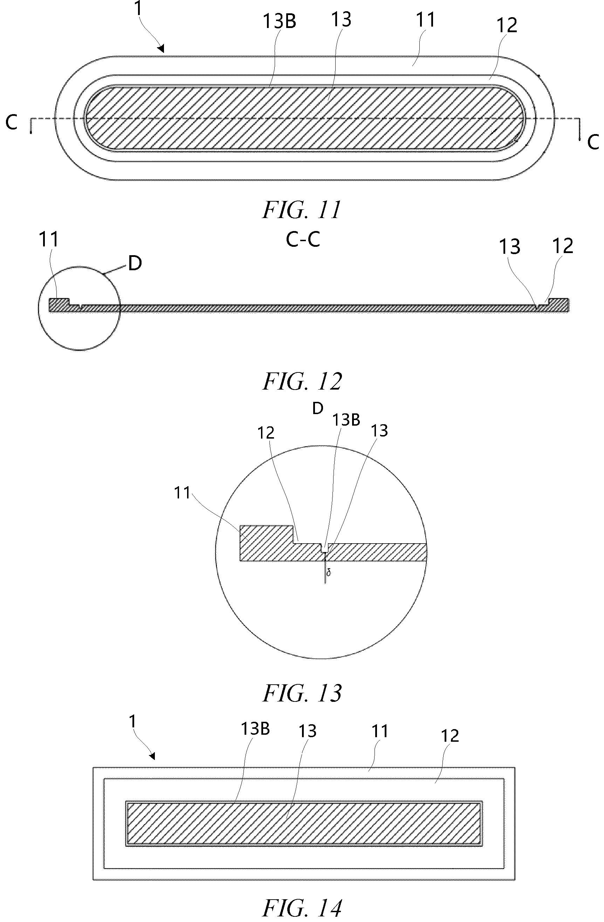

As shown in FIG. 4, the first pressure relief component 1 comprises a base 11. The first weakened portion 13 may be formed on the base 11 by providing a second recess 13A. The second recess 13A is provided on either an inner surface or an outer surface of the base 11. Alternatively, as shown in FIG. 11, the first weakened portion 13 may be formed on the base 11 by providing an indentation 13B. The indentation 13B is provided on either the inner surface or the outer surface of the base 11. The second recess 13A and the indentation 13B may be formed by stamping, milling, laser etching, chemical etching, etc.

When the battery cell 100 of this embodiment is subjected to thermal runaway, due to the reduced thickness at the first weakened portion 13, which results in the reduced strength, the first weakened portion can be reliably opened to smoothly discharge the emissions inside the housing 10, so as to prevent the housing 10 of the battery cell 100 from bulging or even exploding due to untimely pressure relief, so that the operation safety of the battery cell 100 can be improved.

In some embodiments, a ratio of the thickness $\delta$ of the first weakened portion 13 to the area S enclosed by the first weakened portion 13 satisfies the following relationship: $1.5 \times 10^{-5} \leq \dfrac{\delta}{S} \leq 7.5 \times 10^{-3}$.

As shown in FIG. 4, the first pressure relief component 1 comprises a base 11. The first weakened portion 13 may be formed on the base 11 by providing a second recess 13A. The thickness $\delta$ of the first weakened portion 13 is the thickness of the base 11 excluding the second recess 13A, and the area $S$ enclosed by the first weakened portion 13 is the area of the second recess 13A. Alternatively, as shown in FIG. 11, the first weakened portion 13 may be formed on the base 11 by providing an indentation 13B. The thickness $\delta$ of the first weakened portion 13 is the thickness of the base 11 excluding the indentation 13B, and the area $S$ enclosed by the first weakened portion 13 is the area enclosed by the indentation 13B. If the indentation 13B is not closed, the area is calculated based on the shape enclosed by a connecting line, which connects two ends of the indentation 13B, and the indentation 13B.

For example, $\delta$ is in mm, and $S$ is in mm$^2$. For example, the value range of $\delta$ may be 0.03 mm to 3 mm, and the value range of $S$ may be 400 mm$^2$ to 2000 mm$^2$.

When $\delta/S$ is too large and exceeds the right limit, the thickness $\delta$ of the first weakened portion 13 has a maximum value to meet the requirement that the first weakened portion 13 is destroyed preferentially compared with the remaining regions of the housing 10, and the area S enclosed by the first weakened portion 13 has a minimum value to meet the requirement for timely pressure relief of the battery cell 100 to avoid explosion of the battery cell 100 due to untimely pressure relief, so $\delta/S$ has a maximum value.

When $\delta/S$ is too small and exceeds the left limit, the thickness $\delta$ of the first weakened portion 13 has a minimum value to ensure the opening condition of the first weakened portion 13 to avoid damage under normal use conditions, and the area $S$ enclosed by the first weakened portion 13 has a maximum value to avoid over-design and limit the discharge rate of the emissions during thermal runaway to avoid the need to increase the thickness of the protective layer and the strength of the case assembly 20 due to excessive thermal runaway impact, reducing the difficulty of the protection design of the battery 200, so $\delta/S$ has a minimum value.

Table 1 below provides the test results when $\delta/S$ is in different ranges.

| Ranges of $\delta/S$ | Test results |
|---|---|
| $< 1.5 \times 10^{-5}$ | The first pressure relief component 1 is damaged under normal use conditions |
| $1.5 \times 10^{-5}$ to $3 \times 10^{-5}$ | The first pressure relief component 1 can operate normally, but the pressure relief speed is too fast, and a large amount of emissions under thermal runaway are discharged into the battery 200 in a short time, making it difficult for the battery 200 to relieve the pressure |
| $3 \times 10^{-5}$ to $3 \times 10^{-3}$ | The first pressure relief component 1 can operate normally, and the pressure relief speed is appropriate |
| $3 \times 10^{-3}$ to $7.5 \times 10^{-3}$ | The first pressure relief component 1 can operate normally, but the pressure relief speed is too slow, and the battery cell 100 seriously bulges |
| $> 7.5 \times 10^{-3}$ | The first pressure relief component 1 cannot operate normally under abnormal operating conditions, and pressure relief occurs in a region other than the first pressure relief component 1 |

When $\delta/S$ is in the range of $1.5 \times 10^{-5}$ to $7.5 \times 10^{-3}$, the first pressure relief component 1 can operate normally and will not be damaged under the normal use conditions of the battery cell 100. When $\delta/S < 1.5 \times 10^{-5}$, the thickness $\delta$ of the first weakened portion 13 is too small, or the area $S$ enclosed by the first weakened portion 13 is too large, which will reduce the difficulty of opening the first pressure relief component 1, and the first pressure relief component 1 may be damaged under normal use conditions. When $\delta/S > 7.5 \times 10^{-3}$, the thickness $\delta$ of the first weakened portion 13 is too large, or the area $S$ enclosed by the first weakened portion 13 is too small, which will increase the difficulty of opening the first pressure relief component 1, and the first pressure relief component 1 cannot be opened or the opening area is small under thermal runaway conditions, causing the internal pressure of the battery cell 100 to rise sharply, so that it is possible to relieve the pressure through a region of the housing 10 located outside the first pressure relief component 1.

Table 2 below uses multiple specific examples and comparative examples to illustrate the pressure relief situation and the state of the first pressure relief component 1 under vibration and impact when $\delta/S$ has different design values.

| | $\delta$ (mm) | S (mm$^2$) | $\delta/S$ | Pressure relief situation of battery cell 100 | Under vibration and impact |
|---|---|---|---|---|---|
| Example 1 | 0.03 | 2000 | 1.50E/-05 | Normal | Normal |
| Example 2 | 0.03 | 1000 | 3.00E/-05 | Normal | Normal |
| Example 3 | 0.03 | 400 | 7.50E/-05 | Normal | Normal |
| Example 4 | 0.2 | 2000 | 1.00E/-04 | Normal | Normal |
| Example 5 | 0.2 | 1000 | 2.00E/-04 | Normal | Normal |
| Example 6 | 0.2 | 400 | 5.00E-04 | Normal | Normal |
| Example 7 | 3 | 2000 | 1.50E/-03 | Normal | Normal |
| Example 8 | 3 | 1000 | 3.00E-03 | Normal | Normal |

(continued)

|  | $\delta$ (mm) | S (mm²) | $\delta/S$ | Pressure relief situation of battery cell 100 | Under vibration and impact |
|---|---|---|---|---|---|
| Example 9 | 3 | 400 | 7.50E-03 | Normal | Normal |
| Comparative Example 1 | 0.02 | 2000 | 1.00E/-05 | Normal | The first weakened portion cracks |
| Comparative Example 2 | 0.015 | 2000 | 7.50E-06 | Normal | The first weakened portion cracks |
| Comparative Example 3 | 0.01 | 2000 | 5.00E-06 | Normal | The first weakened portion cracks |
| Comparative Example 4 | 3 | 300 | 1.00E-02 | Relieve the pressure in a region other than the first pressure relief component | Normal |
| Comparative Example 5 | 3 | 200 | 1.50E/-02 | Relieve the pressure in a region other than the first pressure relief component | Normal |
| Comparative Example 6 | 3 | 100 | 3.00E-02 | Relieve the pressure in a region other than the first pressure relief component | Normal |

In Table 2 above, in Examples 1 to $\overline{1.5 \times 10^{-5} \leq \frac{\delta}{S} \leq 7.5 \times 10^{-3}}$, the battery cell 100 can relieve the pressure normally under the thermal runaway conditions, and the first weakened portion 13 will not crack normally under vibration and impact. In Comparative Examples 1 to 3, the lower limit of the design range is exceeded. In this case, the first weakened portion 13 has a small thickness and a low structural strength, and cracking occurs at the first weakened portion 13 under normal vibration and impact conditions (referring to GB 38031-2020 or GB/T 31467.3), that is, the strength is too low during normal use, resulting in insufficient reliability. In Comparative Examples 4 to 6, the upper limit of the design range is exceeded. In this case, the area $S$ enclosed by the first weakened portion 13 is small. When the battery cell 100 is subjected to thermal runaway, the pressure relief of the internal emissions is too slow, resulting that pressure relief occurs at a position of the housing 10 located outside the first pressure relief component 1.

Therefore, combined with the above analysis, it can be seen that the thickness $\delta$ of the first weakened portion 13 and the area $S$ enclosed by the first weakened portion 13 have a significant impact on the safety performance of the battery 200. After comprehensive consideration, in this embodiment, the ratio of the thickness $\delta$ of the first weakened portion 13 to the area $S$ enclosed by the first weakened portion 13 is designed to be within an appropriate range, so that when the battery cell 100 is subjected to thermal runaway, the first weakened portion 13 can be reliably opened to allow the internal emissions to be discharged smoothly, so as to prevent the battery cell 100 from exploding due to untimely pressure relief. Moreover, it is also possible to ensure that the discharge speed of the emissions is appropriate, which can not only allow the emissions to be discharged from the housing 10 in a short time, improving the safety of the battery cell 100, but can also reduce the difficulty of protecting the battery 200. In addition, the first weakened portion 13 may also provide a certain opening condition for the first pressure relief component 1 to avoid damage under normal use and vibration and impact conditions.

In some embodiments, $3 \times 10^{-5} \leq \frac{\delta}{S} \leq 3 \times 10^{-3}$.

As can be seen from Table 1, when $\delta/S$ is in this range, the first pressure relief component 1 can operate normally. The first pressure relief component 1 can operate normally, and the discharge speed of the emissions is appropriate during thermal runaway. The battery cell 100 will not seriously bulge due to a too slow pressure relief speed, nor will a large amount of emissions enter the case assembly 20 in a short time due to a too fast pressure relief speed, causing difficulty in pressure relief of the battery 200. Since the value of the pressure relief speed itself is difficult to test, the present application evaluates the actual effect produced during the pressure relief. If the pressure relief speed is too slow, it is possible to cause the build-up of the internal pressure of the battery cell 100, resulting in that the pressure is relieved at a position other than the first pressure relief component 1. If the relief speed is too fast, a large amount of particulate matter may be ejected, and the weight loss of the battery cell 100 will be too high, increasing the protection requirements of the case assembly 20 of the battery 200.

In this embodiment, the value range of $\delta/S$ can allow the first weakened portion 13 to be reliably opened when the battery cell 100 is subjected to thermal runaway, so that the internal emissions are discharged smoothly, so as to prevent the battery cell 100 from exploding due to untimely pressure relief. Moreover, the pressure relief speed is appropriate, which can not only allow the emissions to be uniformly discharged from the housing 10 in a short time, improving the safety of the battery cell 100, but can also reduce the difficulty of protecting the battery 200.

In some embodiments, a ratio of the capacity $C$ of the battery cell 100 to the area $S$ enclosed by the first weakened portion 13 satisfies the following relationship:

$$0.0125 \leq \frac{C}{S} \leq 1.25$$

The capacity $C$ of the battery cell 100, which is one of the important performance indicators to measure the performance of the battery cell 100, represents the amount of electricity released by the battery cell 100 under certain conditions (discharge rate, temperature, termination voltage, etc.). $C$ is in Ah, and $S$ is in $mm^2$.

When $C/S$ is large enough, that is, when the capacity $C$ of the battery cell 100 is at a maximum value, the area $S$ enclosed by the first weakened portion 13 has a minimum value to satisfy the fast pressure relief requirement of the battery cell 100 during thermal runaway, to prevent the battery cell 100 from exploding due to untimely pressure relief, so $C/S$ has a maximum value. When $C/S$ is small enough, that is, when the capacity $C$ of the battery cell 100 is at a minimum value, the area $S$ enclosed by the first weakened portion 13 has a maximum value, so as to improve the economy while ensuring the pressure relief function and prevent design redundancy, because the machining difficulty and accuracy requirements of the first pressure relief component 1 are relatively high, and a smaller area can reduce the production cost. The too fast pressure relief speed is also prevented when the pressure relief area is large, and the difficulty of the protection design of the battery 200 is reduced, so C/S has a minimum value.

Table 3 below provides the test results when $C/S$ is in different ranges.

| Ranges of $C/S$ | Test results |
|---|---|
| < 0.0125 | After the battery cell 100 is subjected to thermal runaway, a large amount of particulate matter is ejected, and the weight loss is > 85% |
| 0.0125 to 0.5 | The first pressure relief component 1 can operate normally, the pressure relief speed is appropriate, and the weight loss is < 85% |
| 0.5 to 1.25 | The first pressure relief component 1 can operate normally, but the pressure relief speed is too slow, and the battery cell 100 seriously bulges |
| > 1.25 | The pressure relief area is insufficient, causing pressure relief in a region other than the first pressure relief component 1, or even explosion |

As can be seen from Table 3, when $C/S$ is less than the left limit value, the area $S$ enclosed by the first weakened portion 13 is too large, and a large amount of particulate matter is quickly discharged from the interior of the battery cell 100 after being is subjected to thermal runaway. The weight loss of the battery cell 100 is large, and too much emissions cause the difficulty of protecting the battery 200 to increase. When $C/S$ is greater than the right limit value, the area $S$ enclosed by the first weakened portion 13 is too small, and the first discharge passage formed by opening the first weakened portion 13 is difficult to discharge the emissions in a timely manner, resulting in pressure relief in a region other than the first pressure relief component 1, or even explosion.

Table 4 below uses multiple specific examples and comparative examples to illustrate the pressure relief situation and the pressure relief process of the battery cell 100 when $C/S$ has different design values.

| | $C$ (Ah) | $S$ ($mm^2$) | $C/S$ | Pressure relief situation of battery cell 100 | Weight loss of battery cell 100 |
|---|---|---|---|---|---|
| Example 1 | 25 | 2000 | 1.25E-02 | Normal | 55% |
| Example 2 | 25 | 1000 | 2.50E-02 | Normal | 50% |
| Example 3 | 25 | 400 | 6.25E-02 | Normal | 43% |
| Example 4 | 200 | 2000 | 1.00E-01 | Normal | 56% |
| Example 5 | 200 | 1000 | 2.00E-01 | Normal | 49% |
| Example 6 | 200 | 400 | 5.00E-01 | Normal | 44% |
| Example 7 | 500 | 2000 | 2.50E-01 | Normal | 54% |

(continued)

| | $C$ (Ah) | $S$ (mm$^2$) | $C/S$ | Pressure relief situation of battery cell 100 | Weight loss of battery cell 100 |
|---|---|---|---|---|---|
| Example 8 | 500 | 1000 | 5.00E-01 | Normal | 50% |
| Example 9 | 500 | 400 | 1.25E+00 | Normal | 42% |
| Comparative Example 1 | 25 | 2500 | 1.00E-02 | Normal | 85% |
| Comparative Example 2 | 25 | 3000 | 8.33E-03 | Normal | 88% |
| Comparative Example 3 | 25 | 3500 | 7.14E-03 | Normal | 90% |
| Comparative Example 4 | 500 | 300 | 1.67E+00 | Relieve the pressure in a region other than the first pressure relief component | 60% |
| Comparative Example 5 | 500 | 200 | 2. 50E+00 | Relieve the pressure in a region other than the first pressure relief component | 70% |
| Comparative Example 6 | 500 | 100 | 5.00E+00 | Relieve the pressure in a region other than the first pressure relief component | 90% |

In Table 4 above, in Examples 1 to 9, $0.0125 \leq \frac{C}{S} \leq 1.25$, the battery cell 100 can relieve the pressure normally under the thermal runaway conditions, and during the pressure relief process of the battery cell 100, the weight loss of the battery cell 100 caused by the ejection of the particulate matter does not exceed 60%. In Comparative Examples 1 to 3, $C/S$ is less than the left limit, and the area $S$ enclosed by the first weakened portion 13 is too large, facilitating the pressure relief of the battery cell 100 during thermal runaway, however, a large amount of particulate matter in the battery cell 100 will be ejected, causing a large weight loss and increasing the difficulty of protecting the battery 200. In Comparative Examples 4 to 6, $C/S$ is greater than the right limit, the area S enclosed by the first weakened portion 13 is too small, and the first weakened portion 13 is difficult to open normally, causing pressure relief in a region of the housing 10 other than the first pressure relief component 1. In this case, due to damage to the other region of the housing 10, a large amount of particulate matter in the battery cell 100 will still be ejected, causing a large weight loss and increasing the difficulty of protecting the battery 200.

Therefore, the capacity $C$ of the battery cell 100 and the area enclosed by the first weakened portion 13 have a significant impact on the safety performance of the battery 200. After comprehensive consideration, in this embodiment, the ratio of the capacity $C$ of the battery cell 100 to the area $S$ enclosed by the first weakened portion 13 is designed to be within an appropriate range, so that when the battery cell 100 is subjected to thermal runaway, the first weakened portion 13 can be reliably opened to allow the internal emissions to be discharged smoothly, so as to prevent the battery cell 100 from exploding due to untimely pressure relief. Moreover, on the basis of ensuring smooth pressure relief, it is possible to prevent the redundant design of the first pressure relief component 1, improve economy, make the pressure relief speed appropriate, prevent a large amount of particulate matter from being ejected during the pressure relief to cause heavy weight loss, and minimize the difficulty of protecting the battery 200.

In some embodiments, $0.0125 \leq \frac{C}{S} \leq 0.5$.

As can be seen from Table 3 above, when $C/S$ is in this range, the first pressure relief component 1 can operate normally, allowing the battery cell 100 to relieve the pressure normally, without serious bulging of the housing 10, the discharge speed of the emissions is appropriate, and the weight loss of the battery cell 100 is < 85%, so that the difficulty of protecting the battery 200 can be reduced.

In this embodiment, the value range of $C/S$ can allow the first weakened portion 13 to be reliably opened when the battery cell 100 is subjected to thermal runaway, so that the internal emissions are discharged smoothly, so as to prevent the battery cell 100 from exploding due to untimely pressure relief. Moreover, the pressure relief speed is appropriate, which can reduce the weight loss of the battery cell 100 during the pressure relief, thereby reducing the difficulty of protecting the battery 200.

In some embodiments, as shown in FIGS. 11 to 18C, the first pressure relief component 1 is a separate component and is connected to the housing 10.

The first pressure relief component 1 is a separately machined part, and is connected to the housing 10 after the machining is completed. For example, the first pressure relief component may be connected to the housing 10 by welding, bonding, fastener fixation, or other means.

The first pressure relief component 1 may be designed into different shapes according to requirements. The following description takes, as an example, the first weakened portion 13 formed by the indentation 13B. When the battery cell 100 is subjected to thermal runaway, the first pressure relief component 1 is destroyed at the indentation 13B.

As shown in FIGS. 11 to 13, the outer shape of the first pressure relief component 1 and the shape enclosed by the indentation 13B are both oblong, and the indentation 13B is closed.

As shown in FIG. 14, the outer shape of the first pressure relief component 1 and the shape enclosed by the indentation 13B are both rectangular, and the indentation 13B is closed.

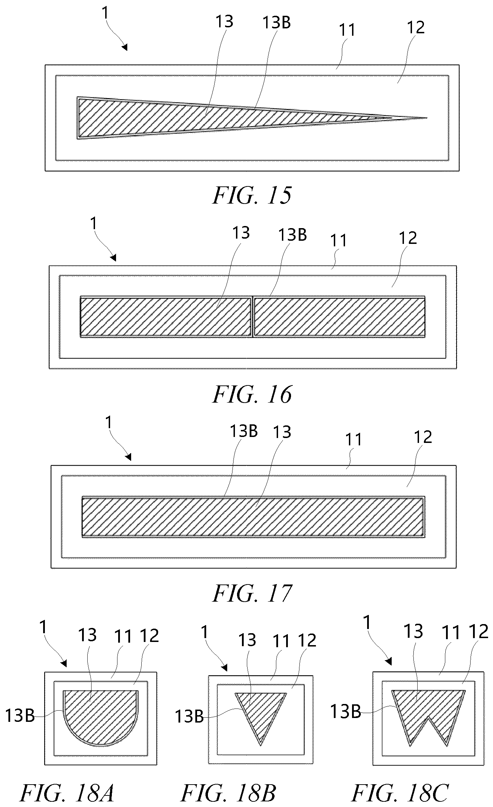

As shown in FIG. 15, the outer shape of the first pressure relief component 1 is rectangular, the shape enclosed by the indentation 13B is triangular, and the indentation 13B is closed.

As shown in FIG. 16, the outer shape of the first pressure relief component 1 is rectangular, the indentation 13B is provided with two sections, each section of the indentation 13B forms a rectangle, the rectangles formed by the two sections of the indentation 13B are arranged side by side, for example they are arranged side by side in a length direction, and no indentation 13B is provided on the sides of the two rectangles that are away from each other. When the battery cell 100 is subjected to thermal runaway, the two first weakened portions 13 are each opened around the side where no indentation 13B is provided, like a door structure.

As shown in FIG. 17, the outer shape of the first pressure relief component 1 is rectangular, and the indentation 13B forms a rectangle. One side of the rectangle is provided with no indentation 13B, for example, the side without the indentation 13B is a short side. When the battery cell 100 is subjected to thermal runaway, the first weakened portion 13 is opened around the side where no indentation 13B is provided, like a door structure.

As shown in FIG. 18A, the outer shape of the first pressure relief component 1 is rectangular, the indentation 13B forms a U shape, and no indentation 13B is provided between two ends of the U-shaped structure. When the battery cell 100 is subjected to thermal runaway, the first weakened portion 13 is opened around the side where no indentation 13B is provided, like a door structure.

As shown in FIG. 18B, the outer shape of the first pressure relief component 1 is rectangular, the indentation 13B forms a V shape, and no indentation 13B is provided between two ends of the V-shaped structure. When the battery cell 100 is subjected to thermal runaway, the first weakened portion 13 is opened around the side where no indentation 13B is provided, like a door structure.

As shown in FIG. 18C, the outer shape of the first pressure relief component 1 is rectangular, the indentation 13B forms a W shape, and no indentation 13B is provided between two ends of the W-shaped structure. When the battery cell 100 is subjected to thermal runaway, the first weakened portion 13 is opened around the side where no indentation 13B is provided, like a door structure.

The first pressure relief component 1 of this embodiment can be machined as a separate part. The process difficulty is low during machining, and can be machined into a structure with a relatively complex shape, and it is easy to ensure the machining accuracy of the first weakened portion 13, such as the thickness $\delta$ of the first weakened portion 13, so as to more accurately control the opening condition of the first pressure relief component 1. When the battery cell 100 is subjected to thermal runaway, the first pressure relief component 1 is opened smoothly and will not be opened under normal operating conditions.

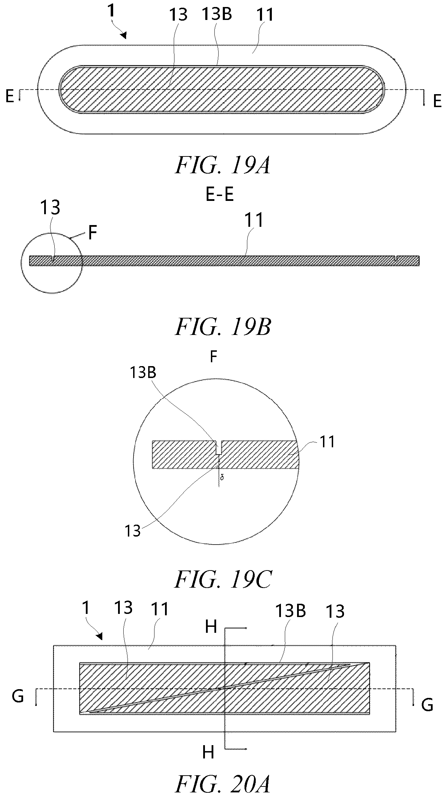

In some embodiments, as shown in FIGS. 19A to 21, the first pressure relief component 1 is integrally formed with the housing 10.

Such a structure may be directly machined on the inner wall and/or the outer wall of the housing 10 to form the first weakened portion 13. Considering that the housing 10 is difficult to clamp and easy to deform, an indentation 13B may be directly machined on a wall surface of the housing 10 to form the first weakened portion 13. For example, the indentation 13B may be machined by a laser or a cutter.

As shown in FIGS. 19A to 19C, the shapes enclosed by the indentations 13B are all oblong, and the indentations 13B are closed. The outer shape of the first pressure relief component 1 shown in the figures does not exist, and is only for partial illustration of the first pressure relief component 1.

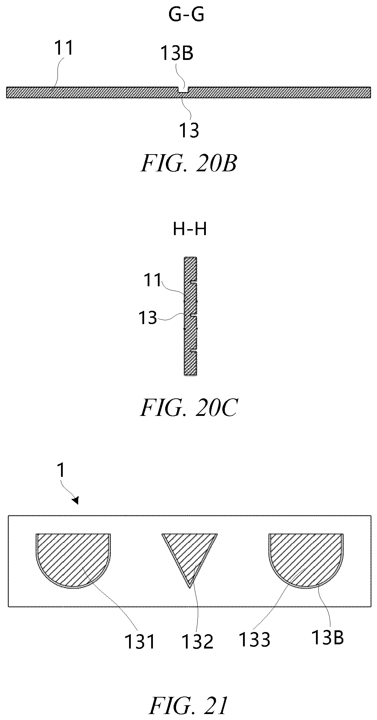

As shown in FIGS. 20A to 20C, the indentation 13B is provided with two sections, and each section of the indentation 13B forms a triangle, for example, may form a right triangle. The two right triangles may be combined into a rectangle, and the hypotenuses of the right triangles may share an indentation 13B, as shown in FIG. 20B. Alternatively, the indentations 13B of the two hypotenuses of the right triangles may be separate from each other. The opposite sides of the two triangles may be provided with no indentation 13B, for example, the opposite short sides may be provided with no indentation 13B. When the battery cell 100 is subjected to thermal runaway, the two first weakened portions 13 are each opened around the side where no indentation 13B is provided, like a door structure. Compared with the rectangular first weakened portion 13, such a structure can improve the structural strength, reduce the amount of deformation under the same air pressure, and make the structure more reliable.

In this embodiment, the first pressure relief component is 1 integrated with the housing 10, so that the process of fixing the first pressure relief component 1 to the housing 10 by welding, etc., can be eliminated, thereby improving the production efficiency of the battery cell 100. Moreover, it is also possible to improve the connection strength of the first pressure relief component 1, prevent a weld seam from being partially exfoliated after long- term use of the battery cell 100, which causes the first pressure relief component 1 to be unreliably connected to the housing 10, and improve the operating reliability and service life of the battery cell 100.

In some embodiments, as shown in FIGS. 11 to 13, the first pressure relief component 1 comprises a base 11, the base 11 is provided with a first recess 12 to form a thickness-reduced portion 12', and the first weakened portion 13 is provided on the thickness-reduced portion 12'.

The first recess 12 may be provided on an inner wall or an outer wall of the base 11, the shape of the first recess 12 may be consistent with the first weakened portion 13, and the remaining thickness of the base 11 after removing the first recess 12 forms the thickness-reduced portion 12'. As shown in FIG. 13, the indentation 12B may be provided at a recess bottom of the first recess 12, and/or provided on a wall of the thickness-reduced portion 12' opposite to the recess bottom of the first recess 12, to form the thickness-reduced portion 12'. Optionally, a second recess 13A may be provided at the recess bottom of the first recess 12 and/or on the wall of the thickness-reduced portion 12' opposite to the recess bottom of the first recess 12.

Due to the addition of the first recess 12, such a structure is more suitable for use in a separate first pressure relief component 1, facilitating the machining of more complex structures.

In this embodiment, the first recess 12 is machined in advance, and the first weakened portion 13 is formed based on the thickness-reduced portion 12', so that the amount of material removal required to form the first weakened portion 13 can be reduced. For example, the depth of the second recess 13A or the indentation 13B is reduced, so that it is possible to reduce the machining difficulty, reduce the amount of deformation during machining, and easily ensure the machining accuracy of the thickness $\delta$ of the first weakened portion 13.

In some embodiments, as shown in FIGS. 11 to 15 and 19A to 19C, the first weakened portion 13 is formed by an indentation 13B, and the indentation 13B forms a closed extension path.

As shown in FIGS. 11 to 13 and FIGS. 19A to 18C, the indentation 13B forms an oblong. As shown in FIG. 14, the indentation 13B forms a rectangle. As shown in FIG. 15, the indentation 13B forms a triangle.

In this embodiment, the indentation 13B forms a closed extension path, so that when the battery cell 100 is subjected to thermal runaway, the indentation 13B can be torn all around, a first discharge port can be quickly opened to prevent the first discharge port from being blocked, and the internal emissions are quickly discharged, thereby reducing the pressure within the battery cell 100 and preventing the housing 10 from bulging.

In some embodiments, as shown in FIGS. 16, 17 and 20A to 21, the first weakened portion 13 is formed by an indentation 13B, and two ends of the indentation 13B do not coincide with each other, that is, the extension path of the indentation 13B is not closed.

As shown in FIG. 16, the indentation 13B is provided with two sections, each section of the indentation 13B forms a rectangle, the rectangles formed by the two sections of the indentation 13B are arranged side by side, for example they are arranged side by side in a length direction, and no indentation 13B is provided on the sides of the two rectangles that are away from each other. When the battery cell 100 is subjected to thermal runaway, the two first weakened portions 13 are each opened around the side where no indentation 13B is provided, like a door structure.

As shown in FIG. 17, the indentation 13B forms a rectangle. One side of the rectangle is provided with no indentation 13B, for example, the side without the indentation 13B is a short side. When the battery cell 100 is subjected to thermal runaway, the first weakened portion 13 is opened around the side where no indentation 13B is provided, like a door structure.

In this embodiment, when the battery cell 100 is subjected to thermal runaway, the first weakened portion 13 is still connected to the housing 10 and will not be ejected with the emissions after the indentation 13B is torn, so that the risk of high-pressure ignition caused by the uncontrollable flying out of a metal sheet, and the risk of clogging of a second pressure relief component on the case assembly 20 can be reduced, improving the operating safety of the battery 200.

In some embodiments, as shown in FIGS. 18A to 18C, the indentation 13B forms a U-shape, a V-shape or a W-shape.

As shown in FIG. 18A, the indentation 13B forms a U shape, and no indentation 13B is provided between two ends of the U-shaped structure. When the battery cell 100 is subjected to thermal runaway, the first weakened portion 13 is opened around the side where no indentation 13B is provided, like a door structure.

As shown in FIG. 18B, the indentation 13B forms a V shape, and no indentation 13B is provided between two ends of the V-shaped structure. When the battery cell 100 is subjected to thermal runaway, the first weakened portion 13 is opened around the side where no indentation 13B is provided, like a door structure.

As shown in FIG. 18C, the indentation 13B forms a W shape, and no indentation 13B is provided between two ends of the W-shaped structure. When the battery cell 100 is subjected to thermal runaway, the first weakened portion 13 is opened around the side where no indentation 13B is provided, like a door structure.

In this embodiment, the first weakened portion 13 can be configured into a special shape according to the pressure relief requirements. During the pressure relief, the first weakened portion 13 is still connected to the housing 10 and will not be ejected with the emissions, and when the thermal runaway occurs, these shapes facilitates the destroying in corner regions, enabling reliable opening for pressure relief.

In some embodiments, as shown in FIG. 21, the housing 10 is provided with at least two first pressure relief components 1.

The first pressure relief components 1 of different structures and sizes will have differences in performance and reliability. In practice, the number of first pressure relief components 1 may be set according to the type of the battery cell 100, the size of a wall surface of the housing 10 that is provided with the first pressure relief components 1, and pressure relief performance and reliability requirements. For example, one or at least two first pressure relief components are provided. When a plurality of first pressure relief components are provided, the shapes and sizes of the plurality of first pressure relief components 1 may be different, or may be the same, and the plurality of first pressure relief components may be arranged on the same wall of the housing 10 or on different walls of the housing 10.

For example, as shown in FIG. 21, three first pressure relief components 1 are arranged at intervals on one of the walls of the housing 10 in a preset direction (such as the length direction of the wall), comprising a first pressure relief sub-component 131, a second pressure relief sub-component 132 and a third pressure relief sub-component 133, in which an extension path of an indentation 13B of each of the two outer pressure relief sub-components forms a U shape, and an extension path of an indentation 13B of the middle pressure relief sub-component forms a V shape.

In this embodiment, by providing at least two first pressure relief components 1, in practice, the number and shape of the first pressure relief components 1 can be designed according to the type of the battery cell 100, the size of a wall surface of the housing 10 that is provided with the first pressure relief components 1, and pressure relief performance and reliability requirements, so that the configuration of the first pressure relief components 1 is more flexible and can flexibly meet the requirements of different battery cells 100.

In some embodiments, the battery cell 100 further comprises electrode terminals 2. The electrode terminals 2 and the first pressure relief component 1 are arranged on different walls of the housing 10.

The electrode terminals 2 and the first pressure relief component 1 are arranged on opposite or adjacent walls of the housing 10.

As shown in FIGS. 3 and 4, the electrode terminals 2 and the first pressure relief component 1 are arranged on opposite walls of the housing 10, the two electrode terminals 2 are arranged facing the top wall 231, and the first pressure relief component 1 is arranged facing the bottom wall 221.

As shown in FIG. 6, the electrode terminals 2 and the first pressure relief component 1 are arranged on adjacent walls of the housing 10, the two electrode terminals 2 are arranged facing the side wall 211, and the first pressure relief component 1 is arranged facing the bottom wall 221.

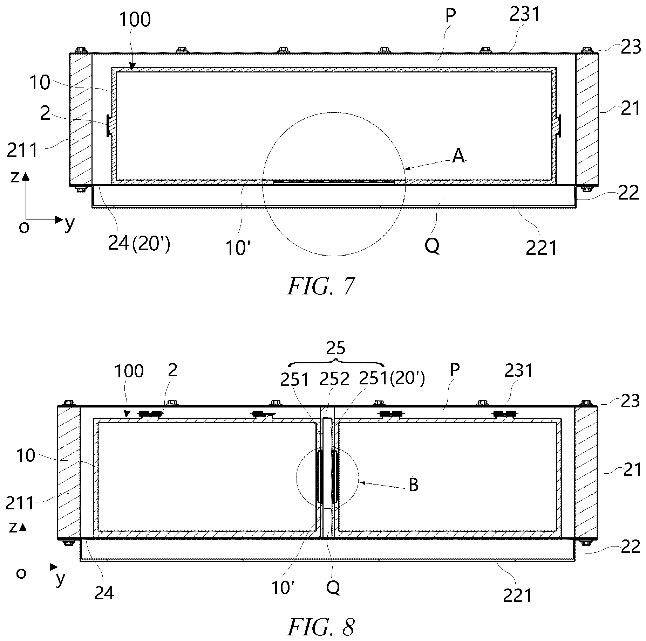

As shown in FIG. 7, the electrode terminals 2 and the first pressure relief component 1 are arranged on the adjacent walls of the housing 10, the two electrode terminals 2 are arranged on the opposite walls of the housing 10 and both face the side wall 211, and the first pressure relief component 1 is arranged facing the bottom wall 221.

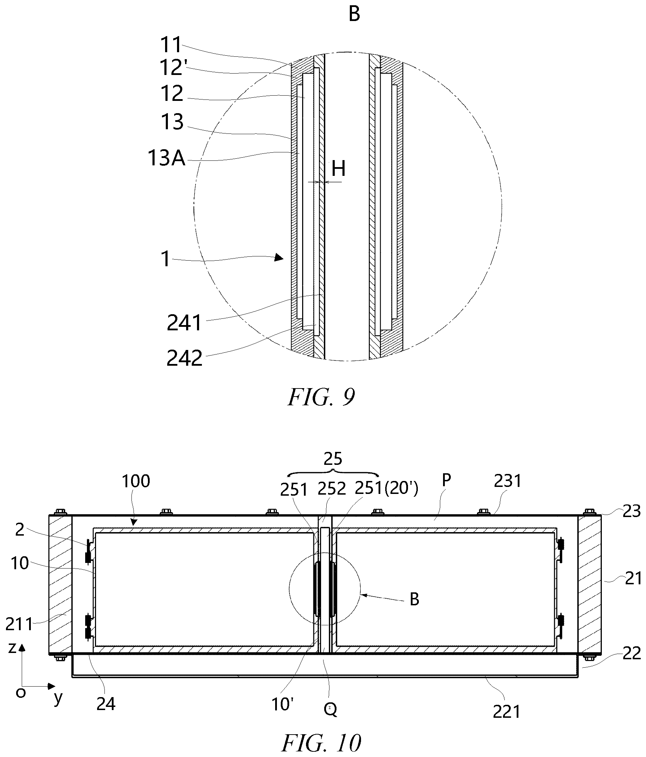

As shown in FIGS. 8 and 9, the case assembly 20 comprises a partition plate 25, the partition plate 25 is configured to divide an internal space of the case assembly 20 into at least two receiving cavities P, and the battery cell 100 is arranged in the receiving cavity P. The electrode terminals 2 and the first pressure relief component 1 are arranged on adjacent walls of the housing 10, the two electrode terminals 2 are arranged facing the top wall 231, and the first pressure relief component 1 is arranged facing the partition plate 25.

As shown in FIG. 10, the case assembly 20 comprises a partition plate 25, the partition plate 25 is configured to divide an internal space of the case assembly 20 into at least two receiving cavities P, and the battery cell 100 is arranged in the receiving cavity P. The electrode terminals 2 and the first pressure relief component 1 are arranged on opposite walls of the housing 10, the two electrode terminals 2 are arranged facing the side wall 211, and the first pressure relief component 1 is arranged facing the partition plate 25.

In this embodiment, the electrode terminals 2 and the first pressure relief component 1 are arranged on different walls of the housing 10, so that the difficulty of layout is reduced, and it is also conducive to providing the electrode terminals 2 and the first pressure relief component 1 that have larger areas according to requirements, thereby making it easier to well meet the requirements of electrical performance and pressure relief. Optionally, the electrode terminals 2 and the first pressure relief component 1 are arranged on the same wall of the housing 10.

In some embodiments, as shown in FIGS. 2 to 4, the first pressure relief component 1 is arranged on a first wall 10' of the housing 10; and the battery 200 further comprises a case assembly 20 for receiving the battery cell 100, a second wall 20' of the case assembly 20 opposite to the first wall 10' is provided with a second weakened portion 241, the second weakened portion 241 is configured to be opened when emissions from the battery cell 100 meet a second preset condition, such that the emissions from the battery cell 100 enter an exhaust passage Q of the case assembly 20.

Second weakened portions 241 are provided on the second wall 20' at positions corresponding to the plurality of battery cells 100. The second preset condition includes: the pressure of the emissions from the battery cell 100 exceeding a second preset pressure, and/or the temperature of the emissions from the battery cell 100 exceeding a second preset temperature. After the battery cell 100 is subjected to thermal runaway, the first weakened portion 13 is destroyed, such that the first pressure relief component 1 is opened, and the emissions inside the battery cell 100 are discharged outward. When the discharged emissions reach the second preset condition, the second weakened portion 241 is destroyed, and the emissions enter the exhaust passage Q in the case assembly 20, and can finally be discharged out of the battery 200 from the second pressure relief component of the case assembly 20.

For example, the second wall 20' may be a partition plate 25, a support plate 24 or a bottom guard plate. Optionally, the second weakened portion 241 may also be provided as a through hole.

In this embodiment, the second wall 20' of the case assembly 20 opposite to the first wall 10' is provided with the second weakened portion 241, so that it is possible that when the battery cell 100 is subjected to thermal runaway, the emissions can smoothly enter the exhaust passage Q, and when the battery 200 operates normally, the second weakened portion 241 can function to increase the strength of the second wall 20' to improve the overall rigidity of the case assembly 20. For example, when the battery 200 is mounted to a power consuming device such as a vehicle and receives vibration and impact, the amount of deformation of the second wall 20' can be reduced.

In some embodiments, the minimum thickness $H$ of the second weakened portion 241, the area $S$ enclosed by the first weakened portion 13 and the energy density $E$ of the battery cell 100 satisfy the following relationship:

$$0.08 \leq \frac{H}{E/S} \leq 20 \ .$$

The energy density $E$ of the battery cell 100 is the energy released per unit mass or unit volume of the battery, that is, volume specific energy or mass specific energy. $E$ is in $Wh/L$, which is watt-hour per liter, and $H$ is in mm. When the battery cell 100 is subjected to thermal runaway, the position of the second weakened portion 241 having the smallest thickness $H$ will be destroyed first.

According to the design requirements, as the energy density $E$ of the battery cell 100 increases, the thermal runaway of the battery cell 100 becomes more and more severe. When $E$ is at a minimum value, the area $S$ enclosed by the first weakened portion 13 has a maximum value. Over-design is prevented and economy is improved while ensuring the exhaust requirements during thermal runaway. Since the thermal runaway process is gentle, the minimum thickness $H$ of the second weakened portion 241 has a maximum value to ensure that the second weakened portion 241 can be smoothly opened during the thermal runaway, so $H/(E/S)$ has a maximum value. When $E$ is at a maximum value, the area S enclosed by the first weakened portion 13 has a minimum value to ensure the pressure relief requirements of the battery cell 100 and prevent the battery from exploding due to untimely pressure relief. Alternatively, the pressure is relieved at a position of the housing 10 located outside the first pressure relief component 1. In this case, the minimum thickness $H$ of the second weakened portion 241 has a minimum value. While meeting the functional requirements of the second weakened portion 241, it is ensured that the second weakened portion 241 has a sufficient structural strength under normal operating conditions to avoid damage under vibration and impact conditions.

Table 5 below uses multiple specific examples and comparative examples to illustrate the functional situation of the second weakened portion 241 and the state of the battery cell 100 under vibration and impact when $H/(E/S)$ has different design values.

| | $H$ (mm) | $E$ (Wh/Kg) | $S$ (mm$^2$) | $H/(E/S)$ | Function of second weakened portion | Under vibration and impact |
|---|---|---|---|---|---|---|
| Example 1 | 0.2 | 1000 | 400 | 0.08 | Normal | Normal |
| Example 2 | 0.2 | 1000 | 1000 | 0.2 | Normal | Normal |
| Example 3 | 0.2 | 1000 | 2000 | 0.4 | Normal | Normal |
| Example 4 | 1 | 500 | 400 | 0.8 | Normal | Normal |
| Example 5 | 1 | 500 | 1000 | 2 | Normal | Normal |
| Example 6 | 1 | 500 | 2000 | 4 | Normal | Normal |
| Example 7 | 2 | 200 | 400 | 4 | Normal | Normal |
| Example 8 | 2 | 200 | 1000 | 10 | Normal | Normal |
| Example 9 | 2 | 200 | 2000 | 20 | Normal | Normal |
| Comparative Example 1 | 0.15 | 1000 | 400 | 0.06 | Normal | Damaged |
| Comparative Example 2 | 0.1 | 1000 | 400 | 0.04 | Normal | Damaged |

(continued)

| | $H$ (mm) | $E$ (Wh/Kg) | $S$ (mm²) | $H/(E/S)$ | Function of second weakened portion | Under vibration and impact |
|---|---|---|---|---|---|---|
| Comparative Example 3 | 0.05 | 1000 | 400 | 0.02 | Normal | Damaged |
| Comparative Example 4 | 2.2 | 200 | 400 | 4.4 | Unable to open | Normal |
| Comparative Example 5 | 2.5 | 200 | 1000 | 12.5 | Unable to open | Normal |
| Comparative Example 6 | 3 | 200 | 2000 | 30 | Unable to open | Normal |

In Table 5 above, in Examples 1 to 9, $$0.08 \leq \frac{H}{E/S} \leq 20$$, in the case of thermal runaway, the second weakened portion 241 can be opened to allow the emissions of the battery cell 100 to smoothly enter the exhaust passage Q to achieve normal pressure relief, and the second weakened portion 241 will not crack normally under vibration and impact. In Comparative Examples 1 to 3, the lower limit of the design range is exceeded. In this case, the second weakened portion 241 has a small thickness and a low structural strength, and the second weakened portion 241 is damaged under normal vibration and impact conditions (referring to GB 38031-2020 or GB/T 31467.3). In Comparative Examples 4 to 6, the upper limit of the design range is exceeded. In this case, the second weakened portion 241 has a relatively large thickness and is less likely to be damaged under normal vibration and impact conditions, however, when the battery cell 100 is subjected to thermal runaway, the second weakened portion 241 cannot be opened normally, the emissions from the battery cell 100 cannot smoothly enter the exhaust passage Q to achieve normal pressure relief.

In this embodiment, after comprehensive consideration, $H/(E/S)$ is designed within a suitable range, so that when the battery cell 100 is subjected to thermal runaway, the second weakened portion 241 can be reliably opened such that the emissions from the battery cell 100 can smoothly enter the exhaust passage Q to achieve normal pressure relief, thereby preventing the battery cell 100 from exploding due to untimely pressure relief. Moreover, it is also possible to ensure that the second weakened portion 241 will not be damaged during normal operation or under vibration and impact, and has a certain opening condition, so that the structural strength of the second wall 20' is increased.

In some embodiments, $$0.2 \leq \frac{H}{E/S} \leq 10$$.

In this embodiment, the value range of $C/S$ can allow for normal pressure relief when the battery cell 100 is subjected to thermal runaway, and can allow the emissions from the battery cell 100 to smoothly enter the exhaust passage Q while ensuring that the battery is not damaged during normal operation and under vibration and impact, so that the emissions smoothly flows to the second pressure relief component to achieve the pressure relief function. Moreover, the emissions can also enter the exhaust passage Q at a uniform speed, preventing the instantaneous increase in pressure due to gas accumulation in the exhaust passage Q, which results in the bulging of the case assembly 20, and reducing the difficulty of protecting the battery 200.

In some embodiments, as shown in FIGS. 2 and 3, the case assembly 20 comprises a bottom wall 221 and a support plate 24, the exhaust passage Q is formed between the support plate 24 and the bottom wall 221, and the support plate 24 serves as the second wall 20' and is configured to support the battery cell 100.

As shown in FIGS. 2 and 3, the case assembly 20 comprises a receiving portion 21, a first cover body 22 and a second cover body 23. The first cover body 22 has the bottom wall 221, the second cover body 23 has a top wall 231, the support plate 24 is arranged between the receiving portion 21 and the first cover body 22, and a plurality of battery cells 100 are arranged on the support plate 24. Two electrode terminals 2 are arranged on a wall of the housing 10 of the battery cell 100 facing the top wall 231. The first pressure relief component 1 is arranged on a wall of the housing 10 facing the bottom wall 221. The support plate 24 is provided with a plurality of second weakened portions 241, and the plurality of second weakened portions 241 are arranged in a one-to-one correspondence with the respective first pressure relief components 1 of the plurality of battery cells 100.

As shown in FIG. 4, a second weakened portion 241 is formed by providing a third recess 242 on a surface of the support plate 24 facing the battery cell 100, and a surface of a first wall 10' of the housing 10 facing the support plate 24 is provided with a first recess 12 to form a thickness-reduced portion 12', and a second recess 13A is provided at a recess bottom of the first recess 12 to form a first weakened portion 13.

Optionally, as shown in FIG. 6, the two electrode terminals 2 are both arranged on a wall of the housing 10 facing a side wall 211. As shown in FIG. 7, the two electrode terminals 2 are respectively arranged on the opposite walls of the housing 10 and both face the side wall 211.

In this embodiment, the space between the support plate 24 and the bottom wall 221 of the case assembly 20 is fully utilized to form the exhaust passage Q, so that it is possible to realize an exhaust passage Q having a larger space and allow the pressure and temperature of the emissions from the battery cell 100 that is subjected to thermal runaway to be instantly reduced after entering the exhaust passage Q, facilitating the smooth flow of the emissions to the second pressure relief component. Moreover, the support plate 24 can also form a second discharge port for allowing the emissions to enter the exhaust passage Q during thermal runaway while functioning to support the battery cell 100.

In some embodiments, as shown in FIGS. 8 and 9, the case assembly 20 comprises a partition plate 25, the partition plate 25 is configured to divide an internal space of the case assembly 20 into at least two receiving cavities P, and the battery cell 100 is arranged in the receiving cavity P. The partition plate 25 comprises two side plates 251 arranged spaced apart from each other and facing the battery cell 100, the side plates 251 serve as the second wall 20', and the exhaust passage Q is formed between the two side plates 251.

As shown in FIG. 8, a battery module is provided in each receiving cavity P. The battery module comprises a plurality of battery cells 100, and two electrode terminals 2 are both arranged on a wall of the housing 10 facing the top wall 231. The partition plate 25 is provided with two side plates 251 arranged spaced apart from each other along a perpendicular line facing a surface of the battery cell 100, respective top portions and/or bottom ends of the two side plates 251 are connected to each other via a connection plate 252, and a cavity formed between the two side plates 251 and the connection plate 252 forms the exhaust passage Q. The side plate 251 is provided with a plurality of second weakened portions 241, and the plurality of second weakened portions 241 are arranged in a one-to-one correspondence with the first pressure relief components 1 of the plurality of battery cells 100 on the same side.

As shown in FIG. 9, a second weakened portion 241 is formed by providing a third recess 242 on a surface of the side plate 251 facing the battery cell 100, and a surface of a first wall 10' of the housing 10 facing the side plate 251 is provided with a first recess 12 to form a thickness-reduced portion 12', and a second recess 13A is provided at a recess bottom of the first recess 12 to form a first weakened portion 13. Where the battery cell 100 is subjected to thermal runaway, after the emissions enter the exhaust passage Q in the partition plate 25, they may directly flow to the second pressure relief component, or may first enter the exhaust passage formed between the support plate 24 and the bottom wall 221 and then flow to the second pressure relief component, so as to more fully reduce the temperature and pressure.

Optionally, as shown in FIG. 10, the two electrode terminals 2 are both arranged on a wall of the housing 10 facing a side wall 211.

In this embodiment, by providing a cavity in the partition plate 25 to form the exhaust passage Q, the internal space of the structural member can be fully utilized while achieving weight reduction.

The structure of the battery 200 of the present application will be described below with reference to the specific embodiments of FIGS. 2 to 4.

As shown in FIG. 2, the battery 200 comprises a case assembly 20 and a plurality of battery modules. The case assembly 20 comprises a receiving portion 21, a first cover body 22 and a second cover body 23. The first cover body 22 and the second cover body 23 are respectively configured to close two opposite openings of the receiving portion 21 and can be fixed by means of fasteners 26. The receiving portion 21 may have a plurality of side walls 211, for example, for forming a rectangular structure. The first cover body 22 has a bottom wall 221, and the bottom wall 221 may protrude in a direction away from the receiving portion 21 and have a flange. The second cover body 23 has a top wall 231, and may be of a plate-like structure. Two electrode terminals 2 of each battery cell 100 are arranged on a wall of the housing 10 facing the second cover body 23.

As shown in FIG. 3, the case assembly 20 further comprises a support plate 24 and a partition plate 25. The support plate 24 is arranged between the receiving portion 21 and the first cover body 22, and a space between the support plate 24 and the first cover body 22 forms an exhaust passage Q. The partition plate 25 is arranged in the receiving portion 21 to divide the space in the receiving portion 21 into at least two receiving cavities P, and each receiving cavity P is internally provided with a battery module. The partition plate 25 may be of a solid structure, or comprise two side plates 251 arranged spaced apart from each other, and the two side plates 251 are connected to each other via a connection plate 252.

The first pressure relief component 1 is arranged on a wall of the housing 10 facing the bottom wall 221. The support plate 24 is provided with a plurality of second weakened portions 241, and the plurality of second weakened portions 241 are arranged in a one-to-one correspondence with the respective first pressure relief components 1 of the plurality of battery cells 100.

As shown in FIG. 4, a second weakened portion 241 is formed by providing a third recess 242 on a surface of the support plate 24 facing the battery cell 100, and a surface of a first wall 10' of the housing 10 facing the support plate 24 is provided with a first recess 12 to form a thickness-reduced portion 12', and a second recess 13A is provided at a recess bottom of the first recess 12 to form a first weakened portion 13.

When the battery cell 100 is subjected to thermal runaway and the pressure inside the housing 10 exceeds the first preset pressure and/or the temperature exceeds the first preset temperature, the first weakened portion 13 is destroyed to form a first discharge port, and the emissions inside the housing 10 are discharged outward. If the pressure of the emissions exceeds the second preset pressure and/or the temperature exceeds the second preset temperature, the second weakened portion 241 is destroyed to form a second discharge port, through which the emissions enter the exhaust passage Q and flow toward the second pressure relief component.

Although the present application has been described with reference to the preferred embodiments, various modifications can be made, and equivalents can be provided to substitute for the components thereof without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

**Claims**

1. A battery cell (100), comprising:

   a housing (10) having a closed inner cavity (10A);
   an electrode assembly (102) arranged in the inner cavity (10A); and
   a first pressure relief component (1) arranged on the housing (10), wherein the first pressure relief component (1) has a first weakened portion (13), and the first weakened portion (13) is a portion of reduced thickness and is configured to be opened when a first preset condition is met within the housing (10).

2. The battery cell (100) according to claim 1, wherein a ratio of the thickness $\delta$ of the first weakened portion (13) to an area S enclosed by the first weakened portion (13) satisfies the following relationship:

$$1.5 \times 10^{-5} \leq \frac{\delta}{S} \leq 7.5 \times 10^{-3}$$
.

3. The battery cell (100) according to claim 2, wherein $3 \times 10^{-5} \leq \frac{\delta}{S} \leq 3 \times 10^{-3}$ .

4. The battery cell (100) according to any one of claims 1-3, wherein a ratio of a capacity C of the battery cell (100) to an area S enclosed by the first weakened portion (13) satisfies the following relationship: $0.0125 \leq \frac{C}{S} \leq 1.25$ .

5. The battery cell (100) according to claim 4, wherein $0.0125 \leq \frac{C}{S} \leq 0.5$ .

6. The battery cell (100) according to any one of claims 1-5, wherein the first pressure relief component (1) is a separate component and is connected to the housing (10).

7. The battery cell (100) according to any one of claims 1-5, wherein the first pressure relief component (1) is integrally formed with the housing (10).

8. The battery cell (100) according to any one of claims 1-7, wherein the first pressure relief component (1) comprises a base (11), the base (11) is provided with a first recess (12) to form a portion of reduced thickness (12'), and the first weakened portion (13) is provided on the portion of reduced thickness (12').

9. The battery cell (100) according to any one of claims 1-8, wherein the first weakened portion (13) is formed by an indentation (13B), and the indentation (13B) forms a closed extension path.

10. The battery cell (100) according to any one of claims 1-8, wherein the first weakened portion (13) is formed by an indentation (13B), and two ends of the indentation (13B) do not coincide with each other.

11. The battery cell (100) according to claim 10, wherein the indentation (13B) forms a U-shape, a V-shape or a W-shape.

12. The battery cell (100) according to any one of claims 1-11, wherein the housing (10) is provided with at least two first pressure relief components (1).

13. The battery cell (100) according to any one of claims 1-12, further comprising electrode terminals (2), wherein the electrode terminals (2) and the first pressure relief component (1) are arranged on different walls of the housing (10).

**14.** A battery (200), comprising a battery cell (100) of any one of claims 1-13.

**15.** The battery (200) according to claim 14, wherein:

the first pressure relief component (1) is arranged on a first wall (10') of the housing (10); and
the battery (200) further comprises a case assembly (20) for receiving the battery cell (100), wherein a second wall (20') of the case assembly (20) opposite to the first wall (10') is provided with a second weakened portion (241), and the second weakened portion (241) is configured to be opened when emissions from the battery cell (100) meet a second preset condition, such that the emissions from the battery cell (100) enter an exhaust passage (Q) of the case assembly (20).

**16.** The battery (200) according to claim 15, wherein a minimum thickness H of the second weakened portion (241), an area S enclosed by the first weakened portion (13), and an energy density $E$ of the battery cell (100) satisfy the following relationship: $0.08 \leq \dfrac{H}{E/S} \leq 20$ .

**17.** The battery (200) according to claim 16, wherein $0.2 \leq \dfrac{H}{E/S} \leq 10$ .

**18.** The battery (200) according to any one of claims 15-17, wherein the case assembly (20) comprises a bottom wall (221) and a support plate (24), the exhaust passage (Q) is formed between the support plate (24) and the bottom wall (221), and the support plate (24) serves as the second wall (20') and is configured to support the battery cell (100).

**19.** The battery (200) according to any one of claims 15-17, wherein the case assembly (20) comprises a partition plate (25), wherein:

the partition plate (25) is configured to divide an internal space of the case assembly (20) into at least two receiving cavities (P), and the battery cell (100) is arranged in the receiving cavity (P); and
the partition plate (25) comprises two side plates (251) arranged spaced apart from each other and facing the battery cell (100), the side plates (251) serve as the second wall (20'), and the exhaust passage (Q) is formed between the two side plates (251).

**20.** A power consuming device, comprising a battery cell (100) of any one of claims 1-13 and/or a battery (200) of any one of claims 14-19, which is configured to supply electric energy to the power consuming device.

*FIG. 1*

*FIG. 2*

25
251 252 251

100    2    P    231

10

211

z

o → y

24(20')    10'    Q    221

23

21

22

A

FIG. 3

A

13A

13
12'
12
11

1

H

241    242

221

FIG. 4

<u>100</u>

*FIG. 5*

*FIG. 6*

FIG. 7

FIG. 8

B

11
12'
12
13
13A

H

1

241

242

FIG. 9

25
251 252 251(20')

100    P    231

2
10

211

z
o    y

24    10'    Q    221    22    21    23

B

FIG. 10

*FIG. 11*

C-C

*FIG. 12*

*FIG. 13*

*FIG. 14*

FIG. 15

FIG. 16

FIG. 17

FIG. 18A
FIG. 18B
FIG. 18C

*FIG. 19A*

E-E

*FIG. 19B*

*FIG. 19C*

*FIG. 20A*

G-G

11    13B

13

*FIG. 20B*

H-H

11

13

*FIG. 20C*

1

131    132    133    13B

*FIG. 21*

*FIG. 22*

## INTERNATIONAL SEARCH REPORT

| International application No. |
| --- |
| **PCT/CN2022/119572** |

### A. CLASSIFICATION OF SUBJECT MATTER

H01M50/342(2021.01)i

According to International Patent Classification (IPC) or to both national classification and IPC

### B. FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 电芯, 泄压, 薄, 防爆, 泄爆, 破, 阀, 厚, 尺寸, 毫米, 微米, 厘米, mm, cm, μm, battery, cell, pressure, relief, thin+, explosion, proof, discharge, burst, valve, thick+, size, millimeter, micrometer, centimeter

### C. DOCUMENTS CONSIDERED TO BE RELEVANT

| Category* | Citation of document, with indication, where appropriate, of the relevant passages | Relevant to claim No. |
| --- | --- | --- |
| X | CN 106165042 A (SUMITOMO ELECTRIC INDUSTRIES, LTD.) 23 November 2016 (2016-11-23) <br> description, paragraphs 70-93, and figures 1-5 | 1-14, 20 |
| Y | CN 106165042 A (SUMITOMO ELECTRIC INDUSTRIES, LTD.) 23 November 2016 (2016-11-23) <br> description, paragraphs 70-93, and figures 1-5 | 15-19 |
| Y | CN 213026309 U (NINGDE CONTEMPORARY AMPEREX TECHNOLOGY CO., LTD.) 20 April 2021 (2021-04-20) <br> description, paragraphs 108-190, and figures 4-19 | 15-19 |
| Y | CN 112331992 A (NINGDE CONTEMPORARY AMPEREX TECHNOLOGY CO., LTD.) 05 February 2021 (2021-02-05) <br> description, paragraphs 76-111, and figures 1-11 | 19 |
| X | CN 103370812 A (SHIN-KOBE ELECTRIC MACHINERY CO., LTD.) 23 October 2013 (2013-10-23) <br> description, paragraphs 13-59, and figures 1-3 | 1, 4-14, 20 |

☑ Further documents are listed in the continuation of Box C.    ☑ See patent family annex.

| | |
| --- | --- |
| \*   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **09 May 2023** | **17 May 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2022/119572** |

### C. DOCUMENTS CONSIDERED TO BE RELEVANT

| Category* | Citation of document, with indication, where appropriate, of the relevant passages | Relevant to claim No. |
|---|---|---|
| Y | CN 103370812 A (SHIN-KOBE ELECTRIC MACHINERY CO., LTD.) 23 October 2013 (2013-10-23) description, paragraphs 13-59, and figures 1-3 | 15-19 |
| X | CN 1604357 A (HITACHI MAXELL LTD.) 06 April 2005 (2005-04-06) description, page 2, 4th-to-last paragraph to page 6, paragraph 2, figures 1-8 | 1-3, 6-8, 10-14, 20 |
| Y | CN 1604357 A (HITACHI MAXELL LTD.) 06 April 2005 (2005-04-06) description, page 2, 4th-to-last paragraph to page 6, paragraph 2, figures 1-8 | 15-19 |
| A | JP 2012204193 A (MITSUBISHI JUKOGYO K.K.) 22 October 2012 (2012-10-22) entire document | 1-20 |

Form PCT/ISA/210 (second sheet) (July 2022)

## INTERNATIONAL SEARCH REPORT
### Information on patent family members

International application No.

**PCT/CN2022/119572**

| Patent document cited in search report | | | Publication date (day/month/year) | Patent family member(s) | | | Publication date (day/month/year) |
|---|---|---|---|---|---|---|---|
| CN | 106165042 | A | 23 November 2016 | KR | 20160144994 | A | 19 December 2016 |
| | | | | DE | 112015001774 | T5 | 22 December 2016 |
| | | | | US | 2017033342 | A1 | 02 February 2017 |
| | | | | WO | 2015156276 | A1 | 15 October 2015 |
| | | | | JPWO | 2015156276 | A1 | 13 April 2017 |
| CN | 213026309 | U | 20 April 2021 | CA | 3156564 | A1 | 13 January 2022 |
| | | | | US | 2022013755 | A1 | 13 January 2022 |
| | | | | WO | 2022006890 | A1 | 13 January 2022 |
| | | | | KR | 20220012943 | A | 04 February 2022 |
| | | | | EP | 3965211 | A1 | 09 March 2022 |
| | | | | CN | 114258611 | A | 29 March 2022 |
| | | | | IN | 202117061121 | A | 17 June 2022 |
| | | | | US | 11450916 | B2 | 20 September 2022 |
| | | | | JP | 2022545324 | A | 27 October 2022 |
| | | | | US | 2022376333 | A1 | 24 November 2022 |
| CN | 112331992 | A | 05 February 2021 | WO | 2021088570 | A1 | 14 May 2021 |
| | | | | CN | 112331992 | B | 03 December 2021 |
| | | | | EP | 3926747 | A1 | 22 December 2021 |
| | | | | US | 2022123423 | A1 | 21 April 2022 |
| | | | | EP | 3926747 | A4 | 08 June 2022 |
| CN | 103370812 | A | 23 October 2013 | KR | 20140016288 | A | 07 February 2014 |
| | | | | WO | 2012111742 | A1 | 23 August 2012 |
| | | | | EP | 2677565 | A1 | 25 December 2013 |
| | | | | EP | 2677565 | A4 | 10 June 2015 |
| | | | | US | 2013316201 | A1 | 28 November 2013 |
| | | | | JPWO | 2012111742 | A1 | 07 July 2014 |
| | | | | JP | 6003655 | B2 | 05 October 2016 |
| | | | | VN | 36138 | A | 25 December 2013 |
| | | | | IN | 201307336 | P1 | 22 April 2016 |
| | | | | CN | 103370812 | B | 21 December 2016 |
| CN | 1604357 | A | 06 April 2005 | KR | 20050031908 | A | 06 April 2005 |
| | | | | JP | 2005108584 | A | 21 April 2005 |
| | | | | JP | 4404300 | B2 | 27 January 2010 |
| | | | | US | 2005069760 | A1 | 31 March 2005 |
| | | | | US | 7732090 | B2 | 08 June 2010 |
| | | | | CN | 100433408 | C | 12 November 2008 |
| | | | | KR | 883179 | B1 | 12 February 2009 |
| JP | 2012204193 | A | 22 October 2012 | JP | 5272034 | B2 | 28 August 2013 |

Form PCT/ISA/210 (patent family annex) (July 2022)